Europäisches Patentamt

European Patent Office

Office européen des brevets

(11) Veröffentlichungsnummer: **0 255 614**
**A2**

(12) # EUROPÄISCHE PATENTANMELDUNG

(21) Anmeldenummer: **87109831.5**

(51) Int. Cl.⁴: **F 16 D 25/14**

(22) Anmeldetag: **08.07.87**

(30) Priorität: **01.08.86 DE 3626177**

(43) Veröffentlichungstag der Anmeldung: **10.02.88**
**Patentblatt 88/6**

(84) Benannte Vertragsstaaten: **DE FR GB IT**

(71) Anmelder: **Xaver Fendt & Co.,**
**Johann-Georg-Fendt-Strasse 4, D-8952 Marktoberdorf**
**(DE)**

(72) Erfinder: **Horsak, Erich, Meichelbeckstrasse 3,**
**D-8952 Marktoberdorf (DE)**
Erfinder: **Reisch, Johann, Korberweg 22,**
**D-8952 Marktoberdorf (DE)**
Erfinder: **Wittmann, Johann, Am Bergblick 19,**
**D-8952 Marktoberdorf (DE)**

(54) **Kupplungseinrichtung für motorgetriebene Fahrzeuge, insbesondere landwirtschaftliche Schlepper.**

(57) Beschrieben ist eine Kupplungseinrichtung für motorgetriebene Fahrzeuge, deren Anfahr- und Schaltkupplung 4 unter Nutzung der Betätigungskraft des Kupplungspedals 4 und einer kupplungspedalgesteuerten Kraft ausrückbar ist und deren Reibelemente bei vollständig niedergetretenem Kupplungspedal 22 mit einem Lüftspiel voneinander abgehoben sind. Um das Einrücken der Kupplung 4, d.h. das Dosieren des Drehmoments beim Einrücken der Kupplung 4 feinfühliger zu gestalten, ist die Einrichtung derart ausgestaltet, dass der gesamte Betätigungsweg des Kupplungspedals 22 beim Niedertreten lediglich zum Aufheben der Anpresskraft der Kupplung 4 führt und das Lüften der Kupplung 4 mit Hilfe der kupplungspedalgesteuerten Kraft erfolgt.

# FENDT

0 255 614

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1435

Λ

Kupplungseinrichtung für motorgetriebene Fahrzeuge, insbesondere landwirtschaftliche Schlepper

Die Erfindung betrifft eine Kupplungseinrichtung mit den im Oberbegriff des Hauptanspruches angegebenen Merkmalen.

Eine solche Kupplungseinrichtung geht aus der DE-PS 32 02 235 hervor. Mit der bekannten Kupplungseinrichtung wird angestrebt, bei Fahrzeugen mit hoher Motorleistung die zum vollständigen Ausrücken der Anfahr- und Schaltkupplung erforderliche Kupplungspedalkraft zu reduzieren, um dadurch ein feinfühliges Einrücken (Dosieren) der Kupplung zu ermöglichen. Hierzu wird beim wirksamen Betätigen des Kupplungspedals der über ein mechanisches Gestänge zur Kupplung geleiteten Kupplungspedalkraft eine hydraulisch erzeugte Hilfskraft überlagert. Die Größe der Hilfskraft ist so bemessen, daß sie allein nicht in der Lage ist, die Kupplung vollständig auszurücken. Hierzu ist vielmehr nur die aus der Kupplungspedalkraft und der Hilfskraft resultierende Gesamtkraft in der Lage. Die Zuschaltung der Hilfskraft erfolgt unmittelbar nach Betätigung des Kupplungspedals. Sie ist über den gesamten Kupplungspedalweg sowohl während des Ausrückens als auch während des anschließenden Einrückens der Kupplung wirksam. Die Wirkung der Hilfskraft besteht in einer wesentlichen Reduzierung der Anpreßkraft, mit der die treibenden und angetriebenen Kupplungshälften zwecks Übertragung eines Drehmoments zusammengepreßt werden. Da das übertragbare Drehmoment bei sonst gleichen Bedingungen direkt abhängig ist von der Anpreßkraft und die Hilfskraft bereits zu

**XAVER FENDT & CO.**                                    **8952 MARKTOBERDORF**
MASCHINEN- UND SCHLEPPERFABRIK                           Johann-Georg-Fendt-Straße 4

ANR: 1 001 523
Fe 1435

Beginn des Kupplungspedalweges zugeschaltet wird, ist der vom Fahrer dosierbare Drehmomentbereich sehr viel geringer als das maximal von der Kupplung übertragbare Drehmoment. Dies führt am Ende des Einrückvorganges der Kupplung, wenn nämlich die Hilfskraft wegfällt, zu Schaltstößen, die nicht nur die Qualität des Schaltvorganges erheblich beeinträchtigen, sondern auch erhebliche Belastungen für die gemeinsam mit der Kupplung im Antriebsstrang liegenden drehmoment-übertragenen Teile mit sich bringen.

Wenn schon aus diesem Grunde von einer guten Dosierbarkeit einer Anfahr- und Schaltkupplung mit Hilfe der bekannten Kupplungseinrichtung keine Rede sein kann, so kommt noch hinzu, daß für das Dosieren nur ein Bruchteil, in der Regel etwa 70 %, des Kupplungspedalweges zur Verfügung steht. Der restliche Kupplungspedalweg wird nach dem Aufheben der Anpreßkraft zum vollständigen Lüften der an der Drehmomentübertragung beteiligten Kupplungsscheiben, insbesondere wenn es sich bei diesen um in Öl laufende handelt, benötigt.

Nachdem somit bei der bekannten Kupplungseinrichtung das Dosieren auf einem nur relativ kleinen Bereich des Kupplungspedalweges begrenzt ist und zudem nur ein geringer Teil des gesamten zu übertragenden Drehmoments dosiert werden kann, ist die bekannte Kupplungseinrichtung für solche Fahrzeuge nicht verwendbar, bei denen insbesondere zum Anfahren unter großen Lasten der gesamte Drehmomentbereich ausgenutzt werden muß.

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1435

- 3 -

Ausgehend von dem beschriebenen Stand der Technik ist es Aufgabe der Erfindung, eine Kupplungseinrichtung der eingangs näher beschriebenen Art zu schaffen, mit der ein noch feinfühligeres Dosieren des Drehmoments beim Ein- und Ausrücken der Kupplung möglich ist.

Die zur Lösung dieser Aufgabe erforderlichen Maßnahmen sind im kennzeichnenden Teil des Patentanspruches 1 beschrieben. Dadurch, daß für das Aufheben der Anpreßkraft der Kupplungsteile nunmehr der gesamte Weg des Kupplungspedals zur Verfügung steht, und somit ein günstigeres Übersetzungsverhältnis der Kupplungspedalkraft erzielt wird, kann die Anpreßkraft der Kupplungsscheiben deutlich höher als bisher gewählt und so ein entsprechend höheres Drehmoment übertragen werden. Dieses höhere Drehmoment ist über seine gesamte Größe stufenlos dosierbar, so daß unter allen Betriebsbedingungen ein weiches und stoßfreies Anfahren des Fahrzeuges und Schalten des Getriebes gewährleistet ist.

Die Unteransprüche beschreiben weitere vorteilhafte Maßnahmen zur Verbesserung der Erfindung.

Die Erfindung wird im folgenden anhand einer Zeichnung näher erläutert. Es zeigt:

Fig. 1 Ein erstes Ausführungsbeispiel einer erfindungsgemäßen Kupplungseinrichtung bei eingerückter Kupplung.

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1435

- 4 -

Fig. 2 die Detailansicht X in Fig. 1 in einem größeren Maßstab, bei geringfügig niedergetretenem Kupplungspedal,

Fig. 3 eine Ansicht entsprechend Fig. 2, mit vollständig durchgetretenem Kupplungspedal,

Fig. 4 die Kupplungseinrichtung gemäß Fig. 1 mit ausgerückter Kupplung und

Fig. 5 ein zweites Ausführungsbeispiel der erfindungsgemäßen Kupplungseinrichtung.

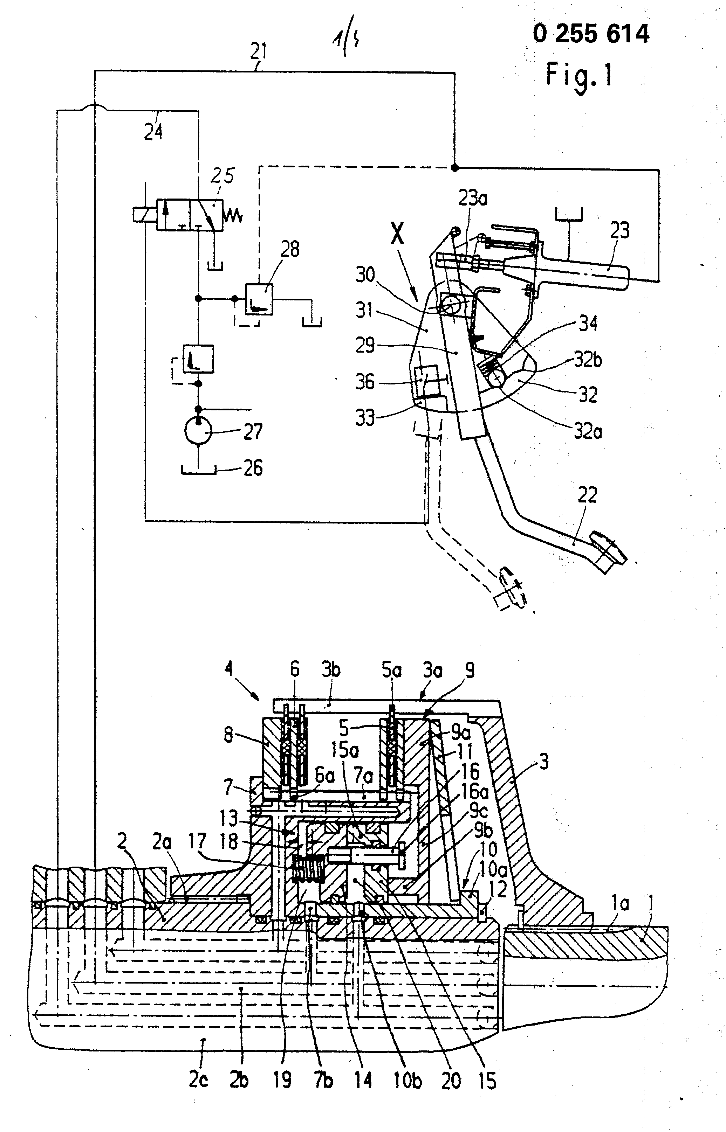

Bei dem Ausführungsbeispiel gemäß Fig. 1 dient die erfindungsgemäße Kupplungseinrichtung zum Kuppeln einer Antriebswelle 1 mit einer Abtriebswelle 2. Im gezeigten Endbereich ist auf der Antriebswelle 1 mittels eines Keilprofils 1a der glockenförmige Außenlamellenträger 3 einer Lamellenkupplung 4 drehfest aber axial verschiebbar angeordnet. In der zylindrischen Außenwand 3a des Außenlamellenträgers 3 sind eine Vielzahl achsparallel verlaufender Schlitze 3b eingearbeitet. In diese greifen eine Vielzahl von innerhalb des Außenlamellenträgers 3 befindlichen, ringförmigen Außenlamellen 5 mit an ihren äußeren Umfang angearbeiteten Zungen 5a ein, wodurch die Außenlamellen 5 relativ zum Außenlamellenträger 3 drehfest aber verschiebbar geführt sind. Jeweils zwischen zwei Außenlamellen 5 befindet sich eine in ihrer Größe den Außenlamellen entsprechende ringförmige Innenlamelle 6. Sämtliche Innenlamellen 6 greifen mit auf der Innenseite vorgesehene Zungen 6a in achsparallelen Schlitzen 7a eines Innenlamellenträgers 7 ein, der von der Abtriebswelle 2 getragen ist und mit dieser über ein Keilprofil 2a drehfest aber axial verschiebbar in Verbindung steht. Sowohl die

**XAVER FENDT & CO.**
MASCHINEN- UND SCHLEPPERFABRIK

8952 MARKTOBERDORF
Johann-Georg-Fendt-Straße 4

ANR: 1 001 523
Fe 1435

- 5 -

Außenlamellen 5 als auch die Innenlamellen 6 sind in ihrer Ebene wellig, um das Lösen der Lamellen voneinander beim Ausrücken der Lamellenkupplung 4 zu erleichtern. Das so gebildete Lamellenpaket stützt sich abtriebswellenseitig an einem vom Innenlamellenträger 7 getragenen Druckring 8 ab. Antriebswellenseitig ist das Lamellenpaket durch den ringförmigen Kranz 9a einer Anpreßscheibe 9 zusammenpreßbar. Diese ist auf einer mit einem Bund 10a versehenen, auf die Abtriebswelle 2 aufgeschobenen Büchse 10 gegen die Kraft einer sich am Kranz 9a und am Bund 10a abstützenden Tellerfeder 11 verschiebbar. Die Büchse 10 ist mittels eines Sicherungsringes 12 axial auf der Abtriebswelle 2 gesichert und bildet gleichzeitig die innere Zylinderwand eines im Innenlamellenträger 7 untergebrachten Stellmotors 13.

Der Stellmotor 13 besteht aus einem ringförmigen Zylinder, in dem zwei Kolben verschiebbar sind, von denen der in der Zeichnung linke als Dosierkolben 14 insbesondere zum gesteuerten Einrücken der Lamellenkupplung 4 eingesetzt wird. Beim Ausrücken der Lamellenkupplung 4 hat er die Aufgabe, die Anpreßscheibe 9 gegen die Kraft der Tellerfeder 11 zu verschieben, bis die das Lamellenpaket zusammenpressende Anpreßkraft gerade aufgehoben ist. Der andere Kolben dient beim Ausrücken der Lamellenkupplung 4 dazu, die Anpreßscheibe 9 zusätzlich zur vom Dosierkolben 14 hervorgerufenen Verschiebung zu verschieben, bis die Außen- und Innenlamellen 5, 6 ein vorbestimmtes Lüftspiel aufweisen, und wird daher als Lüftkolben 15 bezeichnet. Die Übertragung der Längsbewegung des Lüftkolbens 15 auf die Anpreßscheibe 9 erfolgt

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1435

6

Über einen ringförmigen Ansatz 9b im Innenbereich der Anpreßscheibe 9. Um die Feinfühligkeit der Kupplungseinrichtung zu
erhöhen, ist der Innenteil 9c zwischen dem Ansatz 9b und dem
Kranz 9a der Anpreßscheibe 9 verhältnismäßig dünnwandig und
damit federelastisch ausgebildet. Zur Begrenzung des Lüftspiels
dienen mehrere Anschlagbolzen 16, die gleichmäßig über den Umfang verteilt den Lüftkolben 15 abgedichtet durchdringen und
achsparallel in den Dosierkolben 14 eingeschraubt sind. Ein
als Anschlag wirkender Kopf 16a der Anschlagbolzen 16 begrenzt
die axiale Relativbewegung des Lüftkolbens 15 zum Dosierkolben 14.
In der gezeigten eingerückten Ausgangsstellung der Kupplungseinrichtung liegt der Lüftkolben 15 mit einer ringförmigen Nase
15a unmittelbar am Dosierkolben 14 an, der gegen die Kraft
mehrerer gleichmäßig über den Umfang verteilter Druckfedern 17
in die gezeigte Ausgangsstellung geschoben ist und sich dabei
in einem bestimmten Abstand 18 von der Stirnfläche des Stellmotorzylinders befindet. Dieser Abstand ist notwendig, um den
im Laufe der Zeit auftretenden Verschleiß der Außen- 5 und Innenlamellen 6 auszugleichen. Er ist am größten bei Verwendung neuwertiger Lamellen und verringert sich mit zunehmendem Verschleiß.

Beide Kolben 14,15 sind unter Bildung je eines ringförmigen
Druckraumes 19,20 mit einer Aussparung versehen. Der dem Dosierkolben 14 zugeordnete Druckraum 19 steht dabei über 7b im Innenlamellenträger 7, eine Bohrung 2b in der Abtriebswelle 2 und
eine Druckmittelleitung 21 mit dem vom Kupplungspedal 22 betätigten Kupplungszylinder 23 in Verbindung. Der dem Lüftkolben 15
zugeordnete Druckraum 20 steht über eine Bohrung 10b in der Büchse 10, eine Bohrung 2c in der Abtriebswelle 2 sowie eine Druck-

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1435

7

mittelleitung 24, die ein Absperrventil 25 enthält, mit einer aus einem Behälter 26 fördernden Pumpe 27 in Verbindung. Die Bohrungen 7b,10b im Innenlamellenträger 7 sowie in der Büchse 10 sind dabei so angeordnet, daß unabhängig von der Stellung des Dosierkolbens 14 und des Lüftkolbens 15 der jeweils zugeordnete Druckraum 19,20 immer frei zugänglich ist. An die Druckmittelleitung 24 von der Pumpe 27 zum Absperrventil 25 ist ferner ein Druckbegrenzungsventil 28 angeschlossen, das in der Art einer Druckwaage vom Druck der Pumpe 27 sowie vom Druck des Kupplungszylinders 23 derart gesteuert ist, daß der Druck in der Druckmittelleitung 24 niemals den Druck in der Druckmittelleitung 21 übersteigt.

Das Kupplungspedal 22 ist an einem Kupplungshebel 29 befestigt, der seinerseits um eine ortsfeste Achse 30 verschwenkbar ist und in dem dem Kupplungspedal 22 abgewandten Endbereich mit der Kolbenstange 23a des Kupplungszylinders 23 verbunden ist. Gemeinsam mit dem Kupplungshebel 29 auf der Achse 30 gelagert ist eine Schleppscheibe 31, die zwei mit Abstand in Schwenkrichtung hintereinanderliegende Anschläge 32, 33 aufweist, zwischen denen sich der Kupplungshebel 29 befindet. Der Abstand der Anschläge 32,33 voneinander ist im hier beschriebenen Ausführungsbeispiel so gewählt, daß der Kupplungshebel 29 relativ zur Schleppscheibe 31 eine Verschwenkung von etwa 5 Grad durchführen kann. Dadurch ist es möglich, den Lüftkolben 15 praktisch gleichzeitig mit dem Dosierkolben 14 zu beaufschlagen. Wenn es gewünscht ist, kann jedoch der Zeitpunkt, an dem der Lüftkolben 15 beaufschlagt wird, in einfacher Weise dadurch verändert werden, daß der Anschlag 33 gemeinsam mit dem unten erwähnten Schalter 36 verstellbar auf

**XAVER FENDT & CO.**                     **8952 MARKTOBERDORF**
MASCHINEN- UND SCHLEPPERFABRIK           Johann-Georg-Fendt-Straße 4

ANR: 1 001 523
Fe 1435

8

der Schleppscheibe 31 befestigt ist. Auf diese Weise kann das Zuschalten des Lüftkolbens 15 praktisch bei jeder gewünschten Stellung des Kupplungspedals 22 erfolgen.

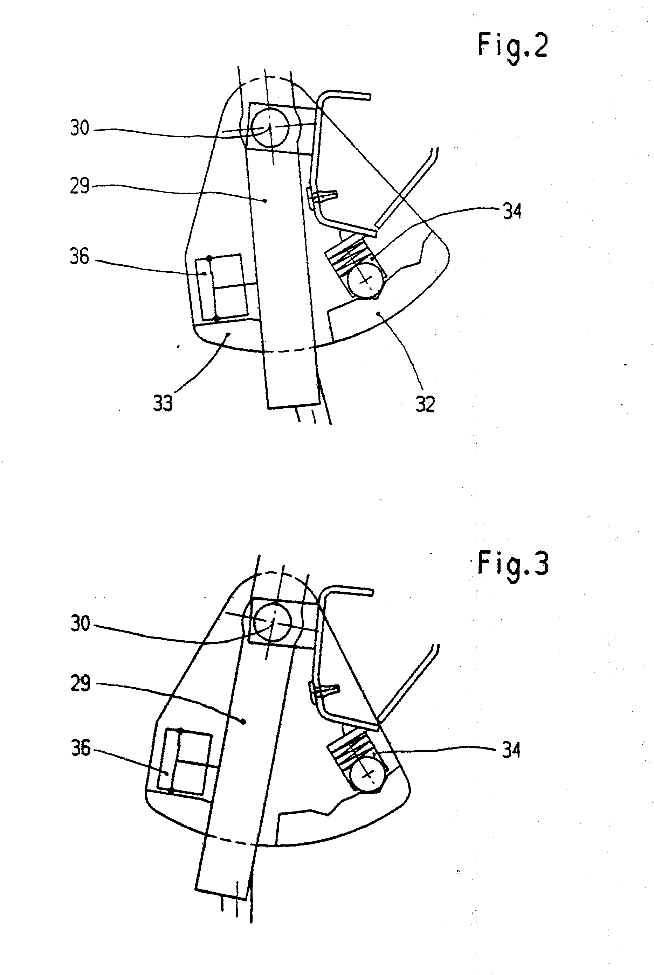

Bei völlig freigegebenem Kupplungspedal 22 liegt der Kupplungshebel 29 am Anschlag 32 an, wobei sich die Schleppscheibe 31 in einer ersten gezeigten Schwenkendstellung befindet. In dieser Schwenkendstellung ist sie, wie auch aus Fig. 2 ersichtlich, durch eine Arretiervorrichtung, deren in einem ortsfest angeordneten Behälter 34 geführte federbelastete Kugel 35 in eine entsprechend angeordnete erste Ausnehmung 32a des Anschlages 32 ruht, arretiert. Zur Arretierung der Schleppscheibe 31 in ihrer anderen Schwenkendstellung (Fig. 3) ist ferner in entsprechendem Abstand von der ersten Ausnehmung 32a eine zweite Ausnehmung 32b im Abschlag 32 vorhanden. An der Schleppscheibe 31 ist ferner ein Schalter 36 befestigt, der unmittelbar bevor der Kupplungshebel 29 nach einer Verschwenkung relativ zur Schleppscheibe 31 am Anschlag 33 zur Anlage kommt, betätigt wird. Der Schalter 36 liegt dabei in einem Stromkreis, über den das Absperrventil 25 steuerbar ist.

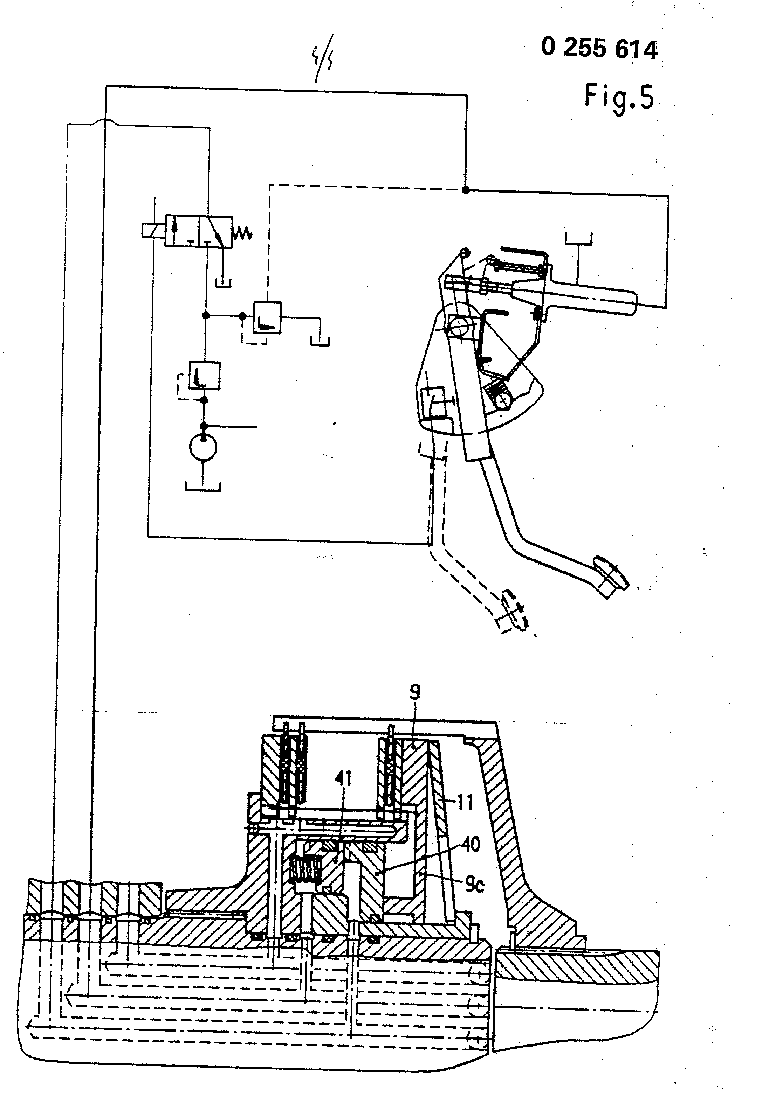

Die Kupplungseinrichtung gemäß Fig. 5 entspricht in ihrem Aufbau im wesentlichen der gemäß Fig. 1, mit der Ausnahme, daß die Verschiebung des Lüftkolbens 40 nicht durch Anschlagbolzen begrenzt ist, und daß der Dosierkolben 41 einen wesentlich größeren Innendurchmesser aufweist als der Lüftkolben 40. Der Hub des Lüftkolbens 40 wird dabei lediglich durch Anschlagen der Anpreßscheibe 9 an der Tellerfeder 11 begrenzt.

XAVER FENDT & CO.
MASCHINEN- UND SCHLEPPERFABRIK

8952 MARKTOBERDORF
Johann-Georg-Fendt-Straße 4

ANR: 1 001 523
Fe 1435

- 9 -

Ausgehend von der in Fig. 1 gezeigten Ausgangsstellung, in welcher das Kupplungspedal nicht betätigt ist. und die Lamellenkupplung 4 eingerückt ist, wird im folgenden die Funktionsweise der Kupplungseinrichtung beschrieben:

Wird zum Ausrücken der Lamellenkupplung 4 das Kupplungspedal 22 niedergetreten, so verschwenkt dieses zunächst allein, bis der Kupplungshebel 29 an dem Anschlag 33 der Schleppscheibe 31 zur Anlage kommt. Dabei beginnt sich im Kupplungszylinder 23, in der Druckmittelleitung 21 und im Druckraum 19 ein den Dosierkolben 14 beaufschlagender Druck aufzubauen. Der Dosierkolben 14 beginnt sich im Sinne des Ausrückens der Lamellenkupplung 4 zu verschieben. Sobald der Kupplungshebel 29 den Anschlag 33 erreicht, schließt der Schalter 36, wodurch das Absperrventil 25 in seine Durchgangsstellung geschaltet wird, in welcher von der Pumpe 27 Druckmittel über die Druckmittelleitung 24 und die Bohrung 2c in den Druckraum 20 des Lüftkolbens 15 eingespeist wird. Aufgrund des geringen Druckes in der Druckmittelleitung 21 wird aber das Druckbegrenzungsventil 28 derart gesteuert, daß der Druck in der Druckmittelleitung 21 den in der Druckmittelleitung 21 nicht übersteigt. Dementsprechend gering ist auch hier die Wirkung dieses Druckes auf den damit beaufschlagten Lüftkolben 15. Dadurch erfolgt das Zuschalten des die Hilfskraft liefernden Druckmittels für die Beaufschlagung des Lüftkolbens 15 für die das Kupplungspedal 22 betätigende Bedienungsperson völlig unbemerkt. Mit weiter niedergetretenem Kupplungspedal 22 steigt der Druck des Kupplungszylinders 23 und mit diesem auch der den Lüftkolben 15 beaufschlagende Druck so daß beide Kolben 14,15 beginnen, sich in Richtung der des Lamellenpaket zusammenpressenden Anpreßscheibe 9 zu bewegen. Das als Druckwaage arbeitende Druckbe-

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1435

10

grenzungsventil 28 stellt dabei ständig sicher, daß der Druckaufbau im Druckraum 20 des Lüftkolbens 15 nicht schneller erfolgt als im Druckraum 19 des Dosierkolbens 14.

Sobald sich der Kupplungshebel 29 am Anschlag 33 angelegt hat, wird die Schleppscheibe 31 synchron mit dem ständig weiter durchgetretenen Kupplungspedal 22 mitgenommen, wobei die Kugel 35 der Arretiervorrichtung aus der Ausnehmung 32a des Anschlages 32 austritt. Wenn das Kupplungspedal 22 seine in Fig. 3 gezeigte Schwenkendstellung erreicht, fällt die Kugel 35 der Arretiervorrichtung in die Aussparung 32b des Anschlages 32 ein und arretiert die Schleppscheibe 31 in dieser Stellung.

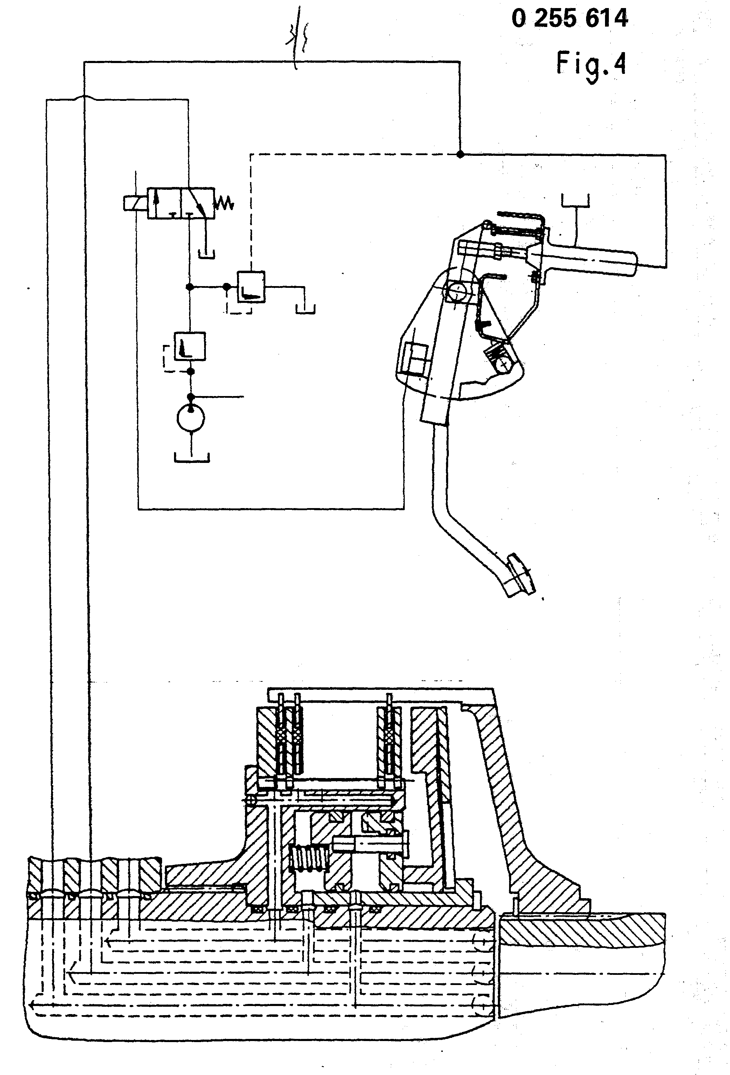

Nach der Erfindung ist der gesamte Schwenkweg des Kupplungspedals 22, die Größe des Dosierkolbens 14 und die wirksame Federrate der Anpreßscheibe 9 so mit der Lamellenkupplung 4 abgestimmt, daß der zurückgelegte Weg des Dosierkolbens 14 unter der Annahme, daß der Lüftkolben 15 nicht beaufschlagt wird, gerade ausreicht, den federnden Innenteil 9c der Anpreßscheibe 9 soweit nach rechts zu verschieben, daß die Lamellen 5,6 des Lamellenpaketes praktisch von der Anpreßkraft der Anpreßscheibe 9 entlastet sind, ohne jedoch voneinander abgehoben zu haben. Da jedoch im vorliegenden Ausführungsbeispiel mit dem Dosierkolben 14 gleichzeitig auch der Lüftkolben 15 beaufschlagt wurde, hat sich der Lüftkolben 15 bei vollkommen niedergetretenem Kupplungspedal 22 soweit vom Dosierkolben 14 entfernt, daß er am Kopf 16a des Anschlagbolzens 16 anliegt, wie dies in Fig. 4 gezeigt ist. Die Lamellenkupplung 4 ist nun mit dem vorgegebenen Lüftspiel vollkommen ausgerückt.

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1435

- 12 -

//

Zum anschließenden Wiedereinrücken der Lamellenkupplung 4 gibt die Bedienungsperson das Kupplungspedal 22 soweit frei, bis der Kupplungshebel 29 am Anschlag 32 der von der Arretiervorrichtung in dieser Schwenkendstellung gehaltenen Schleppscheibe 31 anliegt. Dabei wird der Schalter 36 geöffnet und das Absperrventil 25 in seine Absperrstellung geschaltet, in welcher das im Druckraum 20 des Lüftkolbens 15 befindliche Druckmittel in den Behälter 26 zurückströmen kann. Der Lüftkolben 15 bewegt sich dabei sehr schnell aus seiner rechten Endstellung nach links, bis er wieder am Dosierkolben 14 anliegt, wobei das Lüftspiel des Lamellenpaketes ebenfalls abgebaut wird. Die Lamellen des Lamellenpaketes haben nun bereits Kontakt miteinander, ohne daß dieser jedoch ausreicht, ein nennenswertes Drehmoment von der Antriebswelle 1 zu übertragen. Die zu diesem Zeitpunkt praktisch noch nicht existierende Anpreßkraft der Anpreßscheibe 9 auf das Lamellenpaket und damit die Übertragungsfähigkeit für das Drehmoment wächst aber im Verlauf der weiteren Freigabe des Kupplungspedals 22. Hierbei wird zunächst durch den am Anschlag 32 anliegenden Kupplungshebel 29 die Schleppscheibe 31 zurückgeschwenkt, wobei die Kugel 35 der Arretiervorrichtung aus der Ausnehmung 32b des Anschlages 32 austritt. Wenn das Kupplungspedal 22 seine in Fig. 1 gezeigte Ausgangsstellung wieder eingenommen hat, fällt die Kugel 35 in die Ausnehmung 32a ein und befindet sich der Dosierkolben 14 wieder in seiner Ausgangslage. Auf das Lamellenpaket wirkt über die Anpreßscheibe 9 die volle Anpreßkraft der Tellerfeder 11. Beim Einrücken der Lamellenkupplung 4 stand daher für das Dosieren die gesteuerte Erhöhung der Anpreßkraft des Lamellenpakets und somit des übertragenen Drehmoments, der volle Schwenkbereich des Kupplungspedals 22 zur Verfügung.

**XAVER FENDT & CO.**

MASCHINEN- UND SCHLEPPERFABRIK

**8952 MARKTOBERDORF**

Johann-Georg-Fendt-Straße 4

ANR: 1 001 523

Fe 1435

/2

Die Wirkungsweise der in der Fig. 5 gezeigten Kupplungseinrichtung entspricht praktisch der in Fig. 1 beschriebenen
mit dem Unterschied, daß der Weg des Lüftkolbens 40 relativ
zum Dosierkolben 41 nicht durch Anschlagbolzen sondern durch
Anlegen des Innenteils 9c der Anpreßscheibe 9 an die Tellerfeder 11 begrenzt wird.

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1435

sa-fl

04.07.86

## P a t e n t a n s p r ü c h e

1. Kupplungseinrichtung für motorgetriebene Fahrzeuge, insbesondere landwirtschaftliche Schlepper, deren Anfahr- und Schaltkupplung unter Nutzung der mittels eines mechanischen und/oder hydraulischen Gestänges übersetzten Betätigungskraft des Kupplungspedals und einer kupplungspedalgesteuerten Kraft ausrückbar ist und Reibelemente enthält, die bei unbetätigtem Kupplungspedal durch eine unter der Kraft einer Feder stehende Anpreßscheibe zusammengepreßt und bei vollständig niedergetretenem Kupplungspedal mit einem Lüftspiel voneinander abgehoben sind,

d a d u r c h   g e k e n n z e i c h n e t ,

daß die Übersetzung des Gestänges (Kupplungszylinder (23); Stellmotor (13); Anpreßscheibe (9)) so gewählt ist, daß der gesamte Betätigungsweg des Kupplungspedals (22) lediglich zum Aufheben der Anpreßkraft der Anpreßscheibe (9) zur Verfügung steht und

daß die Kraft beim Ausrücken der Kupplung (4) bei einer beliebigen Stellung des Kupplungspedals (22) in einem dem Lüftspiel entsprechenden Ausmaß zuschaltbar, dagegen beim Einrücken der Kupplung (4) unmittelbar nach dem Verlassen der Endstellung des Kupplungspedals (22) abschaltbar ist.

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1435

- 2 -

2. Kupplungseinrichtung nach Anspruch 1,
   d a d u r c h   g e k e n n z e i c h n e t ,
   daß der Stellmotor (13) einen vom Kupplungszylinder (23)
   beaufschlagbaren Dosierkolben (14) und einen demgegenüber in durch das Lüftspiel vorgegebenen Grenzen verschiebbaren, durch ein die Kraft liefernder Druckmittel beaufschlagbaren Lüftkolben (15) aufweist.

3. Kupplungseinrichtung nach den Ansprüchen 1 und 2,
   d a d u r c h   g e k e n n z e i c h n e t ,
   daß der Dosierkolben (14) und der Lüftkolben (15) unmittelbar hintereinander in einem gemeinsamen Zylinderraum angeordnet sind.

4. Kupplungseinrichtung nach den Ansprüchen 1 bis 3,
   d a d u r c h   g e k e n n z e i c h n e t ,
   daß einer der beiden Kolben (Dosierkolben (14); Lüftkolben
   (15)) gegenüber dem anderen Kolben begrenzt längsverschiebbar ist.

5. Kupplungseinrichtung nach Anspruch 4,
   d a d u r c h   g e k e n n z e i c h n e t ,
   daß der Dosierkolben (14) mit mindestens einem Anschlagbolzen (16) versehen ist, entlang dem der Lüftkolben (15)
   entsprechend dem Lüftspiel begrenzt längsverschiebbar ist.

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1435

- 3 -

6. Kupplungseinrichtung nach den Ansprüchen 1 bis 5,
   d a d u r c h   g e k e n n z e i c h n e t ,
   daß die Längsverschiebung des Dosierkolbens (14) und des
   Lüftkolbens (15) über ein elastisches Element in die Anpreßscheibe (9) eingeleitet wird.

7. Kupplungseinrichtung nach Anspruch 6,
   d a d u r c h   g e k e n n z e i c h n e t ,
   daß die Anpreßscheibe (9) aus einem äußeren, mit den Reibelementen (Außenlamelle (5); Innenlamelle (6)) zusammenwirkenden starren Kranz (9a) und einem in Richtung der Längsverschiebung der Kolben (14,15) federnden Innenteil (9c)
   als elastisches Element besteht.

8. Kupplungseinrichtung nach den Ansprüchen 1 bis 7,
   d a d u r c h   g e k e n n z e i c h n e t ,
   daß die Zuführung des den Lüftkolben (15) beaufschlagenden
   Druckmittels über ein Absperrventil (25) erfolgt, das von
   einem mit dem Kupplungspedal (22) zusammenarbeitenden Schalter (36) steuerbar ist.

9. Kupplungseinrichtung nach den Ansprüchen 1 bis 8,
   d a d u r c h   g e k e n n z e i c h n e t ,
   daß der Schalter (36) fahrzeugfest angeordnet und bei vollständig niedergetretenem Kupplungspedal (22) betätigbar ist.

10. Kupplungseinrichtung nach den Ansprüchen 1 bis 8,
    d a d u r c h   g e k e n n z e i c h n e t ,
    daß der Schalter (36) ortsveränderlich angeordnet ist.

**XAVER FENDT & CO.**
MASCHINEN- UND SCHLEPPERFABRIK

**8952 MARKTOBERDORF**
Johann-Georg-Fendt-Straße 4

ANR: 1 001 523
Fe 1435

- 4 -

11. Kupplungseinrichtung nach Anspruch 10,
d a d u r c h   g e k e n n z e i c h n e t ,
daß der Schalter (36) auf einer von dem Kupplungspedal (22)
verschwenkbaren Schleppscheibe (31) befestigt ist und von
einem mit dem Kupplungspedal (22) verschwenkenden Teil
(Kupplungshebel (29)), der zwischen zwei Anschlägen (32,33)
der Schleppscheibe (31) begrenzt frei bewegbar ist, bei
Anliegen an dem beim Betätigen des Kupplungspedals (22)
wirksamen Anschlag (33) betätigt ist.

12. Kupplungseinrichtung nach den Ansprüchen 10 und 11,
d a d u r c h   g e k e n n z e i c h n e t ,
daß der Schalter (36) verstellbar und der wirksame Abstand
der Anschläge (32,33) veränderbar ist.

13. Kupplungseinrichtung nach Anspruch 11,
d a d u r c h   g e k e n n z e i c h n e t,
daß die Schleppscheibe (31) in ihren Schwenkendstellungen
arretiert ist.

14. Kupplungseinrichtung nach den Ansprüchen 11 bis 13,
d a d u r c h   g e k e n n z e i c h n e t ,
daß die Schleppscheibe (31) um die Achse (30) des Kupplungspedals (22) verschwenkbar ist.

15. Kupplungseinrichtung nach den Ansprüchen 1 bis 14,
d a d u r c h   g e k e n n z e i c h n e t ,
daß der Lüftkolben (15) bei betätigtem Schalter (36) mit
dem gleichen Druck wie der Dosierkolben (14) beaufschlagt
ist.

**XAVER FENDT & CO.**
MASCHINEN- UND SCHLEPPERFABRIK

**8952 MARKTOBERDORF**
Johann-Georg-Fendt-Straße 4

ANR: 1 001 523

Fe 1435

- 5 -

16. Kupplungseinrichtung nach Anspruch 15,
d a d u r c h   g e k e n n z e i c h n e t ,
daß an die Druckmittelleitung (24) ein Druckbegrenzungsventil (28) in Art einer Druckwaage angeschlossen ist, die
vom den Dosierkolben (14) beaufschlagenden Druck und vom
den Lüftkolben (15) beaufschlagenden Druck gesteuert ist.

0 255 614
Fig.1

24

Fig.2

30

29

36

34

33

32

Fig.3

30

29

36

34

0 255 614

Fig.4

Fig.5